# EUROPÄISCHE PATENTSCHRIFT

(11) **EP 2 454 977 B1**
(45) Veröffentlichungstag und Bekanntmachung des Hinweises auf die Patenterteilung: **08.05.2013**
(21) Anmeldenummer: 11401629.8
(22) Anmeldetag: 15.11.2011
(51) Int. Cl.: A47J 31/44

(54) **Getränkebereiter mit höhenverstellbarem Getränkeauslauf**
Beverage maker comprising height-adjustable beverage discharger
Dispositif de préparation de boissons avec unité d'écoulement réglable en hauteur

(30) Priorität: 23.11.2010 DE 102010060732
(43) Veröffentlichungstag der Anmeldung: 23.05.2012
(73) Patentinhaber: Miele & Cie. KG, 33332 Gütersloh (DE)
(72) Erfinder: Lind, Martin, 33397 Rietberg (DE)

(56) Entgegenhaltungen:
- EP-B1- 1 745 726
- DE-A1-102004 050 365
- DE-A1-102008 029 835

## Beschreibung

Die Erfindung betrifft einen Getränkebereiter mit einem Getränkeausgabebereich, einer Bedien- und Steuerungseinrichtung zum Auslösen eines Getränkeausgabevorganges in ein im Getränkeausgabebereich abgestelltes Gefäß, einer Einheit zur Zubereitung von Getränken, welche mit einem Getränkeauslauf in fluidleitender Verbindung steht, wobei der Getränkeauslauf mittels Antriebsmotor im Getränkeausgabebereich in der Höhe verstellbar ausgebildet ist und in Abhängigkeit eines von einer Sensoranordnung erzeugten Signals relativ zum Gefäßrand positionierbar ist und wobei die Sensoranordnung an einer mit dem Getränkeauslauf verbundenen Tragstruktur angeordnet ist und die Lage des Gefäßrandes während einer mit der Höhenverstellung des Getränkeauslaufs gekoppelten Bewegung erfasst.

Ein derartiger Getränkebereiter ist aus der DE 10 2008 029 835 A1 oder der EP 1 745 726 B1 1 bekannt. Die Sensoranordnung zur Gefäßranderkennung ist ortsfest mit dem bewegbaren Getränkeauslauf gekoppelt. Die Sensoranordnung ist an einem Träger angeordnet, der gemeinsam mit dem Getränkeauslauf verfahrbar ist. Der Träger ist derart ausgebildet und mit dem Getränkeauslauf gekoppelt, dass die Sensoren zur Gefäßranderkennung bei der Höhenverstellung des Getränkeauslaufs auf der Außenseite des Gefäßes verfahren. Dadurch sind die Sensoren bei der Getränkeausgabe nicht direkt dem Einfluss von Spritzern und Dampf ausgesetzt.

Aus der JP 06046876 Y ist eine Abgabevorrichtung für Getränke mit einem höhenverstellbar ausgebildeten Getränkeauslauf bekannt, bei der die Position des Getränkeauslaufs in Abhängigkeit der Gefäßhöhe einstellbar ist. Die Gefäßhöhe wird über einen Sensor erfasst, der gemeinsam mit dem höhenverstellbaren Getränkeauslauf auf einer Plattform angeordnet ist.

Aus der DE 10 2004 050 365 A1 ist es bekannt, bei einem motorisch höhenverstellbar ausgebildeten Getränkeauslauf an dem Auslaufrohr einen Gefäßrandsensor anzuordnen. Der Gefäßrandsensor ist als Infrarotsensor ausgebildet, welcher gemeinsam mit dem Auslaufrohr nach unten fährt, bis der Gefäßrandsensor den Rand des Gefäßes erfasst und meldet.

Um die Verfälschung der Messergebnisse durch aufsteigende Dämpfe, das austretende Getränk oder auffliegende Tröpfchen zu verhindern, wird gemäß den Angaben in der DE 10 2004 050 365 A1 vorgeschlagen, die Getränkeförderung und die Messung alternierend einzuschalten oder eine Luftströmung über dem Gefäß zu erzeugen. Trotz dieser Maßnahme kann eine Verschmutzung der Sensoranordnungen nicht sicher vermieden werden.

Der Erfindung stellt sich somit das Problem die Anordnung von Sensoren zur Gefäßranderkennung für einen Getränkebereiter mit motorisch verstellbar ausgebildetem Getränkeauslauf derart zu optimieren, dass die Messergebnisse nicht durch den Vorgang der Getränkeausgabe sowie unterschiedliche Gefäßformen bzw. nicht richtig auf der Stellfläche positionierte Gefäße verfälscht werden.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass die Sensoranordnung spritzgeschützt an der Tragstruktur angeordnet ist und dass die während der Getränkeausgabe aufsteigenden Dämpfe die Signalauswertung zur Erfassung des Tassenrandes nicht beeinflussen, da die Tragstruktur derart mit dem Getränkeauslauf mechanisch gekoppelt ist, dass die Sensoranordnung hinter einer den Getränkeausgabebereich mindestens teilweise begrenzenden Wand bewegbar angeordnet ist, wobei die Wand in mindestens einem Abschnitt signaldurchlässig ausgebildet ist.

In einer vorteilhaften Ausgestaltung der Erfindung ist der signaldurchlässige Abschnitt in der Rückwand des Getränkeausgabebereichs angeordnet. Es ist jedoch auch möglich, alternativ oder zusätzlich einen signaldurchlässigen Abschnitt in mindestens einer Seitenwand des Getränkeausgabebereichs auszubilden.

Der signaldurchlässige Abschnitt ist für die Erfassung des Tassenrandes mittels optischer Sensoren vorzugsweise als transparente Scheibe ausgebildet. Wird der Tassenrand mittels Ultraschall erfasst, ist der signaldurchlässige Abschnitt schlitzförmig ausgebildet. In einer weiteren Ausführung ist der signaldurchlässige Abschnitt mit einer signaldurchlässigen Gitter-oder Netzstruktur ausgebildet.

Ein Ausführungsbeispiel der Erfindung ist in den Zeichnungen rein schematisch dargestellt und wird nachfolgend näher beschrieben. Es zeigt
- Figur 1: einen erfindungsgemäßen Getränkebereiter in perspektivischer Darstellung der Frontansicht,
- Figur 2: den Getränkeauslauf sowie die Sensoren an der Tragstruktur als Einzelheit

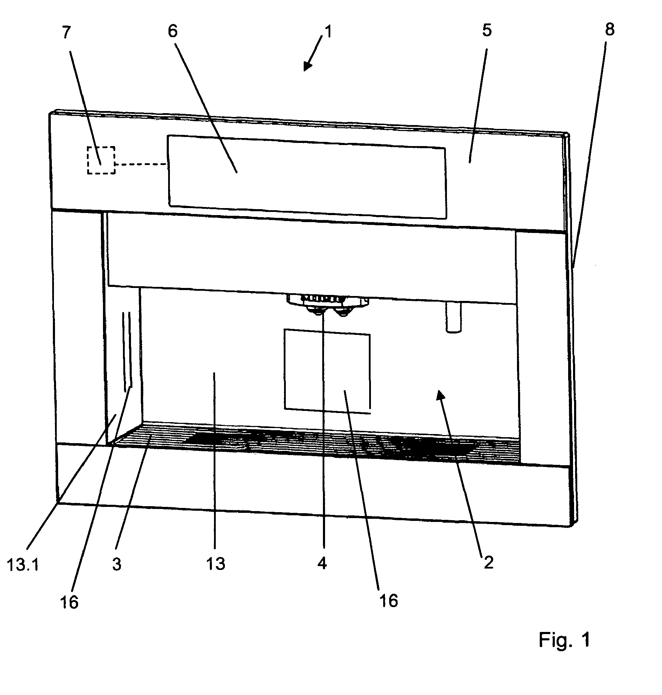

Der in Figur 1 dargestellte Getränkebereiter 1 weist einen nischenförmig ausgebildeten Getränkeausgabebereich 2 auf. Der Getränkeausgabebereich 2 wird nach unten durch eine Stellfläche 3 für hier nicht dargestellte Tassen, Gläser etc. begrenzt. Im oberen Bereich des Getränkeausgabebereichs 2 ist ein höhenverstellbarer Getränkeauslauf 4 angeordnet. Der hier dargestellte Getränkeauslauf 4 ist mit zwei Ausgabeöffnungen ausgebildet. Oberhalb des Getränkeausgabebereichs 2 ist die Bedienblende 5 der Bedieneinrichtung angeordnet, die bei diesem Ausführungsbeispiel mit einer grafikfähigen Anzeige 6 ausgebildet ist. Die Anzeige 6 weist auch sogenannte Touch-Bedienelemente auf, die hier nicht näher dargestellt sind. Die Bedieneinrichtung ist mit einer durch unterbrochene Linien symbolisch dargestellten Steuerungseinrichtung 7 des Getränkebereiters 1 signalübertragend verbunden. Der Getränkeauslauf 4 steht mit einer im Getränkebereiter 1 integriert angeordneten Einheit zur Zubereitung (nicht dargestellt) der Getränke in fluidleitender Verbindung. Die wesentlichen Bauteile des Getränkebereiters 1 sind bei dem dargestellten Ausführungsbeispiel hinter einer Tür 8 integriert angeordnet. Die Tür 8 schließt den nicht näher dargestellten Korpus des Getränkebereiters 1 nach vorne hin ab. In dem Korpus selbst sind beispielsweise Vorrats-und Entsorgebehälter sowie die Einheit zur Zubereitung der Getränke, z.B. eine Brüheinheit für den Kaffee, angeordnet.

In Figur 1 ist der höhenverstellbare Getränkeauslauf 4 in der obersten Betriebslage dargestellt. In dieser Lage ist es möglich, auch große Tassen zur Aufnahme von Kaffee, Milch und/oder Milchschaum unter den Getränkeauslauf 4 zu stellen. Der Getränkeauslauf 4 ist motorisch verfahrbar. Er verfährt in vertikaler Richtung in Bezug auf das auf der Stellfläche 3 positionierte Gefäß.

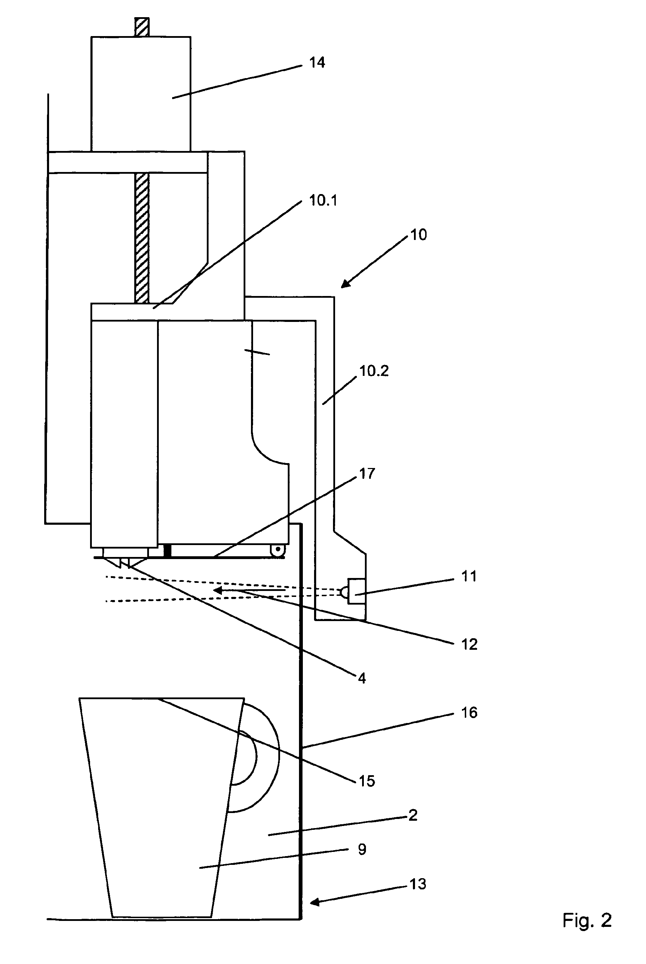

In der Figur 2 ist der Getränkeauslauf 4 sowie ein darunter abgestelltes Gefäß 9 schematisch als Einzelheit in der Seitenansicht dargestellt. Der Getränkeauslauf 4 ist an einer motorisch in der Höhe verstellbar ausgebildeten Tragstruktur 10 angeordnet. Die Tragstruktur 10 weist einen wenigstens annähernd oberhalb und/oder im Zentrum des Gefäßes 9 positionierbaren Träger 10.1 für den Getränkeauslauf 4 auf. Außerdem ist die Tragstruktur 10 mit einem Träger 10.2 für die Sensoranordnung 11 ausgebildet. Die Sensoranordnung 11 ist derart am Träger 10.2 befestigt angeordnet, dass die Detektionsachse 12 der Sensoranordnung vorzugsweise orthogonal zur Rückwand 13 des Getränkeausgabebereichs 2 verläuft. Die Detektionsachse 12 hat während der Höhenverstellung des Getränkeauslaufs 4 einen Vorlauf gegenüber den Ausgabeöffnungen des Getränkeauslaufs 4.

Grundsätzlich ist es auch möglich, dass die Sensoranordnung 11 mehrere Sensoren umfasst. Die Sensoranordnung 11 ist mechanisch bzw. ortsfest mit dem Getränkeauslauf 4 über die gemeinsame Tragstruktur 10 gekoppelt und wird mit diesem mittels Antriebsmotor 14 verfahren. Sobald über die Bedienblende 5 der Bedieneinrichtung ein Getränk ausgewählt wurde und damit signalisiert, dass ein Gefäß 9 unter dem Getränkeauslauf 4 steht, wird der Getränkeauslauf 4 mit der Sensoranordnung 11 nach unten verfahren. Der Antriebsmotor 14 verfährt die Tragstruktur 10 mit dem Getränkeauslauf 4 und der Sensoranordnung 11 so lange, bis der Getränkeauslauf 4 minimal oberhalb des Gefäßrandes 15 steht. Nachdem das Getränk ausgegeben wurde verfährt der Getränkeauslauf 4 wieder in die höchste Stellung, was der Ausgangs- und Grundposition entspricht. Die Sensoranordnung 11 ist derart an dem Träger befestigt, dass sie unterhalb des Gefäßrandes 15 positioniert ist, wenn der Getränkeauslauf 4 minimal oberhalb des Gefäßrandes 15 positioniert ist (Vorlauf der Detektionsachse 12). Sobald die Sensoranordnung 11 den Gefäßrand 15 erkennt, stoppt der Antriebsmotor 14.

Der Träger 10.2 für die Sensoranordnung 11 ist derart mit der Tragstruktur 10 gekoppelt, dass die Sensoranordnung 11 hinter einer den Getränkeausgabebereich 2 mindestens teilweise begrenzenden Wand bewegbar ist. Bei dem in Figur 2 dargestellten Ausführungsbeispiel verfährt die Sensoranordnung 11 hinter der Rückwand 13 der Nische für den Getränkeausgabebereich 2. Es ist auch möglich, die Tragstruktur 10 derart auszubilden, dass die Sensoranordnung 11 hinter mindestens einer seitlichen Wand 13.1 (siehe Figur 1) der Nische des Getränkeausgabebereichs 2 verfährt. Grundsätzlich ist es möglich, Sensoranordnungen 11 sowohl im Bereich der Rückwand 13 als auch im Bereich von mindestens einer seitlichen Wand 13.1 vorzusehen. Die Sensoranordnung 11 ist jeweils hinter der Wand spritzgeschützt angeordnet. Damit eine Signalauswertung in Bezug auf die Erkennung des Gefäßrandes 15 möglich ist, ist die Rückwand 13 und/oder mindestens eine seitliche Wand 13.1 in mindestens einem Abschnitt 16 signaldurchlässig ausgebildet. Die Detektionsachse 12 der Sensoranordnung 11 ist vorzugsweise orthogonal zur Ebene des signaldurchlässigen Abschnitts 16 ausgerichtet.

Ist für die Erkennung des Gefäßrandes 15 eine optische Sensoranordnung 11 (Infrarot-Sender und Infrarot-Empfänger oder eine Kamera vorgesehen), ist der signaldurchlässige Abschnitt 16 als transparente Scheibe ausgebildet. Die Scheibe ist vorzugsweise im Infrarotwellenlängenbereich durchlässig ausgebildet, so dass die Sensoranordnung 11 den Gefäßrand 15 im Infrarotbereich detektieren kann, der Sensoraufbau hinter der Scheibe jedoch für den Benutzer im sichtbaren Wellenlängenbereich nicht erkennbar ist.

Für die Erkennung des Gefäßrandes 15 mittels Ultraschallsignal (Ultraschall-Sender und Ultraschall-Empfänger), ist der signaldurchlässige Abschnitt 16 vorzugsweise schlitzförmig ausgebildet. Der Schlitz bzw. Durchbruch in der Wand weist nur eine geringe Spaltbreite auf, so dass eine Verschmutzung der Sensoranordnung 11 durch Spritzer vermieden wird. Als Alternative ist auch ein Abschnitt mit einer signaldurchlässig ausgebildeten Gitterstruktur/Netzstruktur möglich.

Der Getränkeauslauf 4 ist vorzugsweise mit einer druckempfindlichen Platte 17 ausgestaltet. Für den Fall, dass die Sensoranordnung 11 den Gefäßrand 15 nicht erkennt und die Bewegung des Getränkeauslaufs 4 nicht gestoppt wird, löst die druckempfindliche Platte 17 bei Kontakt mit dem Gefäßrand 15 einen Sicherheitsschalter aus. Dadurch wird die nach unten gerichtete Bewegung des Getränkeauslaufs 4 gestoppt. Es ist möglich, den Getränkeauslauf 4 nach dem Stoppsignal in seine Ausgangsposition oder um eine definierte Wegstrecke nach oben zurückzufahren.

Der erfindungsgemäße höhenverstellbare Getränkeauslauf 4 mit der Sensoranordnung 11 ist auch für die Anwendung in Kühlschränken mit in der Tür integrierten

Getränkeausgabebereichen geeignet. Weitere Anwendungsmöglichkeiten, zum Beispiel in Wasseraufbereitungssystemen, sind denkbar.

## Patentansprüche

1. Getränkebereiter (1) mit einem Getränkeausgabebereich (2), einer Bedien- und Steuerungseinrichtung (5, 7) zum Auslösen eines Getränkeausgabevorganges in ein im Getränkeausgabebereich (2) abgestelltes Gefäß (9), einer Einheit zur Zubereitung von Getränken, welche mit einem Getränkeauslauf (4) in fluidleitender Verbindung steht, wobei der Getränkeauslauf (4) mittels Antriebsmotor (14) im Getränkeausgabebereich (2) in der Höhe verstellbar ausgebildet ist und in Abhängigkeit eines von einer Sensoranordnung (11) erzeugten Signals relativ zum Gefäßrand (15) positionierbar ist und wobei die Sensoranordnung (11) an einer mit dem Getränkeauslauf (4) verbundenen Tragstruktur (10) angeordnet ist und die Lage des Gefäßrandes (15) während einer mit der Höhenverstellung des Getränkeauslaufs (4) gekoppelten Bewegung erfasst,
**dadurch gekennzeichnet,**
**dass** die Tragstruktur (10) derart mit dem Getränkeauslauf (4) mechanisch gekoppelt ist, dass die Sensoranordnung (11) hinter einer den Getränkeausgabebereich (2) mindestens teilweise begrenzenden Wand bewegbar angeordnet ist, wobei die Wand in mindestens einem Abschnitt (16) signaldurchlässig ausgebildet ist.

2. Getränkebereiter nach Anspruch 1,
**dadurch gekennzeichnet,**
**dass** mindestens ein signaldurchlässiger Abschnitt (16) in der Rückwand (13) und/oder in mindestens einer seitlichen Wand (13.1) des Getränkeausgabebereichs (2) angeordnet ist.

3. Getränkebereiter nach Anspruch 2,
**dadurch gekennzeichnet,**
**dass** der signaldurchlässige Abschnitt (16) als transparente Scheibe ausgebildet ist.

4. Getränkebereiter nach Anspruch 2,
**dadurch gekennzeichnet,**
**dass** der signaldurchlässige Abschnitt (16) schlitzförmig ausgebildet ist.

5. Getränkebereiter nach Anspruch 2,
**dadurch gekennzeichnet,**
**dass** der signaldurchlässige Abschnitt (16) mit einer signaldurchlässigen Gitterstruktur/Netzstruktur ausgebildet ist.

6. Getränkebereiter nach Anspruch 5,
**dadurch gekennzeichnet,**
**dass** die Sensoranordnung (11) mindestens einen Ultraschall-Sender und mindestens einen Ultraschall-Empfänger umfasst.

7. Getränkebereiter nach Anspruch 3,
**dadurch gekennzeichnet,**
**dass** die Sensoranordnung (11) mindestens einen Infrarot-Sender und mindestens einen Infrarot-Empfänger umfasst.

8. Getränkebereiter nach Anspruch 3,
**dadurch gekennzeichnet,**
**dass** als Sensoranordnung (11) eine Kamera vorgesehen ist.

9. Getränkebereiter nach einem der Ansprüche 1 bis 8,
**dadurch gekennzeichnet,**
**dass** mindestens eine Detektionsachse (12) der Sensoranordnung (11) orthogonal zur Ebene des signaldurchlässigen Abschnitts (16) ausgerichtet ist.

## Claims

1. Beverage maker (1) comprising a beverage dispensing region (2), an operation and control means (5, 7) for initiating a beverage dispensing operation into a vessel (9) placed in the beverage dispensing region (2), a unit for preparing beverages which has a fluid-conveying connection to a beverage outlet (4), the beverage outlet (4) being formed so as to be adjustable in height by means of a drive motor (14) in the beverage dispensing region (2) and being positionable relative to the vessel edge (15) according to a signal generated by a sensor arrangement (11), and the sensor arrangement (11) being arranged on a support structure (10) connected to the beverage outlet (4) and detecting the position of the vessel edge (15) during a movement coupled to the height adjustment of the beverage outlet (4), **characterised in that** the support structure (10) is mechanically coupled to the beverage outlet (4) in such a way that the sensor arrangement (11) is movably arranged behind a wall which defines the beverage dispensing region (2) at least in part, the wall being formed so as to be permeable to signals at least in one portion (16).

2. Beverage maker according to claim 1, **characterised in that** at least one signal-permeable portion (16) is arranged in the rear wall (13) and/or in at least one lateral wall (13.1) of the beverage dispensing region (2).

3. Beverage maker according to claim 2, **characterised in that** the signal-permeable portion (16) is formed as a transparent panel.

4. Beverage maker according to claim 2, **characterised in that** the signal-permeable portion (16) has a slit-like configuration.

5. Beverage maker according to claim 2, **characterised in that** the signal-permeable portion (16) is formed using a signal-permeable grating structure/lattice structure.

6. Beverage maker according to claim 5, **characterised in that** the sensor arrangement (11) comprises at least one ultrasound transmitter and at least one ultrasound receiver.

7. Beverage maker according to claim 3, **characterised in that** the sensor arrangement (11) comprises at least one infrared transmitter and at least one infrared receiver.

8. Beverage maker according to claim 3, **characterised in that** a camera is provided as the sensor arrangement (11).

9. Beverage maker according to any of claims 1 to 8, **characterised in that** at least one detection axis (12) of the sensor arrangement (11) is orthogonal to the plane of the signal-permeable portion (16).

## Revendications

1. Préparateur de boisson (1), avec une zone de distribution de boisson (2), un dispositif de manoeuvre et de commande (5, 7) pour le déclenchement d'un processus de distribution de boisson dans un récipient (9) déposé dans la zone de distribution de boisson (2), une unité de préparation de boissons qui est en liaison de transport fluidique avec une sortie de boisson (4), la sortie de boisson (4) étant réalisée de façon réglable en hauteur au moyen d'un moteur d'entraînement (14) dans la zone de distribution de boisson (2) et pouvant être positionnée par rapport au bord de récipient (15) en fonction d'un signal produit par un dispositif de capteur (11), et le dispositif de capteur (11) étant disposé sur une structure porteuse (10) raccordée à la sortie de boisson (4), et la position du bord de récipient (15) étant détectée pendant un mouvement couplé au réglage en hauteur de la sortie de boisson (4),
**caractérisé en ce que**
la structure porteuse (10) est couplée mécaniquement à la sortie de boisson (4) de telle sorte que le dispositif de capteur (11) est disposé de façon mobile derrière une paroi délimitant au moins partiellement la zone de distribution de boisson (2), la paroi étant réalisée de façon transparente aux signaux dans au moins un tronçon (16).

2. Préparateur de boisson selon la revendication 1,
**caractérisé en ce**
**qu'**au moins un tronçon (16) transparent aux signaux est disposé dans la paroi arrière (13) et/ou dans au moins une paroi latérale (13.1) de la zone de distribution de boisson (2).

3. Préparateur de boisson selon la revendication 2,
**caractérisé en ce que**
le tronçon (16) transparent aux signaux est réalisé en tant que vitre transparente.

4. Préparateur de boisson selon la revendication 2,
**caractérisé en ce que**
le tronçon (16) transparent aux signaux est réalisé en forme de fente.

5. Préparateur de boisson selon la revendication 2,
**caractérisé en ce que**
le tronçon (16) transparent aux signaux est réalisé avec une structure de grillage/structure de filet transparente aux signaux.

6. Préparateur de boisson selon la revendication 5,
**caractérisé en ce que**
le dispositif de capteur (11) comprend au moins un émetteur d'ultrasons et au moins un récepteur d'ultrasons.

7. Préparateur de boisson selon la revendication 3,
**caractérisé en ce que**
le dispositif de capteur (11) comprend au moins un émetteur d'infrarouges et au moins un récepteur d'infrarouges.

8. Préparateur de boisson selon la revendication 3,
**caractérisé en ce que**,
en tant que dispositif de capteur (11), il est prévu une caméra.

9. Préparateur de boisson selon une des revendications 1 à 8,
**caractérisé en ce**
**qu'**au moins un axe de détection (12) du dispositif de capteur (11) est orienté à angle droit par rapport au plan du tronçon (16) transparent aux signaux.
